# EUROPEAN PATENT SPECIFICATION

(11) **EP 3 687 854 B1**
(45) Date of publication and mention of the grant of the patent: **28.12.2022**
(21) Application number: 18858136.7
(22) Date of filing: 17.09.2018
(51) Int. Cl.: B60N 2/16, B60N 2/90

(54) **HEIGHT ADJUSTMENT MECHANISM**
HÖHENVERSTELLMECHANISMUS
MÉCANISME DE RÉGLAGE EN HAUTEUR

(30) Priority: 19.09.2017 TR 201713874; 07.09.2018 TR 201812903
(43) Date of publication of application: 05.08.2020
(73) Proprietor: Martur Sünger ve Koltuk Tesisleri Ticaret ve Sanayi Anonim Sirketi, Bursa (TR)
(72) Inventor: DOGAN, Anil, Bursa (TR); SACAR, Ismail, Bursa (TR); DAL, Murat, Bursa (TR); KURT, Recep, Bursa (TR); DEVECI, Omer Osman, Bursa (TR)
(74) Representative: Demirkiran, Hasan
(86) International application number: PCT/TR2018/050500
(87) International publication number: WO 2019/059865

(56) References cited:
- EP-A1- 1 867 518
- WO-A1-2014/020284
- JP-A- 2014 185 669
- US-A1- 2003 173 182
- US-A1- 2012 112 508
- US-A1- 2017 253 148

## Description

### Technical Field

The present invention relates to a height adjustment mechanism which provides up-and-down motion of both the driver seat and passenger seats and, is used for adjusting the height of the seats.

Especially, the present invention relates to height adjustment mechanism which provides a more stable and durable working mechanism by transmitting load (momentum) directly from driving member to outer member without intermediate momentum transmission elements such as brake bearings (roller, ball) which are less durable than mentioned driving member and outer member.

### Prior Art

The height adjustment mechanism is the mechanism that allows the vehicle seats to move up or down for making both driver and passengers to feel comfortable during cruising.

The height adjustment mechanism is normally in a stationary position thanks to the ball groups located within its inner structure. When the vehicle seat is exposed to the variable external load, the position of the vehicle seat is maintained by means of these ball groups. For up-and-down motion of the vehicle seat, the seat is moved towards desired direction by means of control lever. This process is repeated until the seat is brought to the desired position. When the seat is brought to the desired position, it is provided that the seat remains in this position by releasing the control lever.

In the prior art, rotation momentum incoming from control lever to driving member is transmitted indirectly to output member through brake bearings. Since the all load is exerted on the brake bearings (which has less durable material than the material of both driving member and output member), durability and stability performances of height adjustment mechanism reasonably decrease.

In the height adjustment mechanism used in prior art, the piece which ball group is contacted with, bears the load and is requested to be strength is produced separately by means of fine blanking operation, is connected to a metal cover and so load is transferred to the connection points through the metal cover. Thus, number of pieces increases and, weight and cost of the product increase depending of this situation.

In another height adjustment mechanism used in prior art, the piece which ball group is contacted with and bears the load is produced from single piece metal by means of cold rolling method. Likewise, this situation increases the weight and cost of the product. The dimensions reduced to decrease the cost do not reach the desired strength values.

In similar structures supplying desired functions in the prior art also have disadvantages such as excess number of piece, weight and cost.

In prior art, another problem for height adjustment mechanism is the difficulty of mounting.

In national and international patent literature, there are patent applications about height adjustment mechanism.

The document EP1867518 discloses a seat's height adjusting device for motor vehicle, having a connection unit i.e. nipple, openings and shoulders, retaining rotation of rotative element around rotation axis relative to blocking element, where nipple comes to stop against shoulder.

The national document TR200502088 that is classified in B60N 2/16, relates to seat-height adjustment mechanism which provides the user to adjust the height of the seat with little effort and without change its seating position.

The international document WO2015160014 that is classified in A47C 7/02, A47C 7/14, B60N 2/16, B60N 2/18, relates to height adjustment mechanism allowing the vehicle seat to be adjusted. The height adjustment mechanism comprises a support plate having a circular accommodation part longitudinally having a predetermined width; a brake cam, which forms a plurality of accommodation spaces in the circumferential direction between the brake cam and the inner circumference of the accommodation part; locking means accommodated in the respective accommodation spaces, for unlocking or locking the rotary movement of the brake cam; a control plate having, on one side thereof, control protrusions for pressing the locking means in the circumferential direction and having, on the other side thereof, a circular rim having teeth formed on the inner circumferential surface thereof; a bidirectional clutch gear engaging or disengaging from the teeth from inside the rim; a lever plate for rotating the bidirectional clutch gear; and an elastic return means for returning the lever plate. With the pieces mentioned above, it is possible to do height adjustment for vehicle seat. Here, the number of pieces causes problems about piece weight and cost to emerge up.

The document US8348344 B2 relates to seat-height adjustment mechanism. Here, output member consists of three pieces. This causes number of pieces of mechanism to increase. Besides, momentum is transmitted from driving member to output member through brake bearings. This means there is no direct contact between driving member and output member. Since the momentum is transmitted through less durable materials (brake bearings), stability and durability performances of mentioned mechanism are very low.

As a result, the existence of the problems mentioned above and lack of related solution make necessary this present invention to emerge.

### Objectives and Short Description of the Invention

Invention aims to solve mentioned problems, eliminates all disadvantages and brings additional advantages to the structure.

Main purpose of the invention is to provide advantage at weight and unit cost by fulfilling desired functions with less number of piece.

Present invention aims to provides a single piece base plate structure which receives the momentum incoming to mentioned output member and which allows bearings and springs to work within.

Another aim of the invention is to provide direct contact between output member and drive surfaces of driving member by eliminating brake bearings when braking is disrupted by push surfaces of driving member.

Another aim of the invention is that mentioned momentum is received by driving member and output member which are more durable according to mentioned brake bearings.

Another aim of the invention is to provide a more stable and durable working mechanism by transmitting mentioned load directly from driving member to outer member instead of brake bearings which are less durable.

Another aim of the invention is to provide a single piece output member which is rotated as a result of motion incoming from said input member and so which brings the seat in desired directions.

Structural, characteristic properties, working principle, advantages of invention will be understood clearly thanks to shapes given below and detailed description formed by citing these shapes. So, it is necessary to make the evaluation considering these shapes and detailed description.

### Description of the Figures

In figure 1a, an exploded perspective view of the present invention is given.
In figure 1b, a perspective view of present height adjustment mechanism is given.
In figure 2a, front view of present base plate structure is given.
In figure 2b, a perspective view of mentioned base plate structure is given.
In figure 3a, side view of present output member is given.
In figure 3b, top view of mentioned output member is given.
In figure 3c, a perspective view of said output member is given.
In figure 4a, back perspective view of driving member is given.
In figure 4b, a front perspective view of driving member is given.
In figure 5a, top view of input member is given.
In figure 5b, perspective view of input member is given.
In figure 5c, perspective view of control lever is given.
In figure 6a, top view of cover is given.
In figure 6b, perspective view of cover is given.
In figure 7a, front view of present height adjustment mechanism in the idle state is given.
In figure 7b, top sectional view of present height adjustment mechanism in the idle state is given.
In figure 8a, front view of present height adjustment mechanism at load is given.
In figure 8b, top sectional view of present height adjustment mechanism at load is given.
In figure 9a, top sectional view of prior height adjustment mechanism in the idle state is given.
In figure 9b, top sectional view of prior height adjustment mechanism at load is given.

### Reference Numerals

- 1.: Height Adjustment Mechanism
- 2.: Control lever
- 3.: Axis set
- 10.: Base plate
11. Base plate-hole
12. Screw-fastening orifice
13. Base plate-security surface
14. Connection zone
15. Base plate-bearing surface
16. Base plate-locking surface

- 20.: Output member
21. Output member-centering surface
22. Output member-rotation surface
23. Output member-locking surface
24. Output member-bearin surface

- 30.: Brake bearing
- 40.: Brake spring
- 50.: Driving member
51. Driving member-security surface
52. Driving member-positioning surface
53. Driving member-lock surface
54. Driving member-centering surface
55. Driving member-bearing surface
56. Push surface
57. Drive surface
58. Base plate contact surface

- 60.: Drive bearing
- 70.: Drive spring
- 80.: Input member
81. Input member-lock surface
82. Input member-positioning surface
83. Input member-contact surface
84. Drive interval
85. Cover contact surface

- 90.: Cover
91. Input member stopping element
92. Centering pin
93. Holding claw

### Detailed Description of the Invention

Height adjustment mechanism (1) which is the mechanism allowing height adjustment by providing up and down motion of both driver and passenger seats in vehicle, comprises generally a base plate (10), an output member (20), brake bearing (30), brake spring (40), a driving member (50), drive bearing (60), drive spring (70), an input member (80), a cover (90) and a control lever (2). It could be better to explain mentioned height adjustment mechanism (1) through the figures from 1 to 9 for understanding of the present invention.

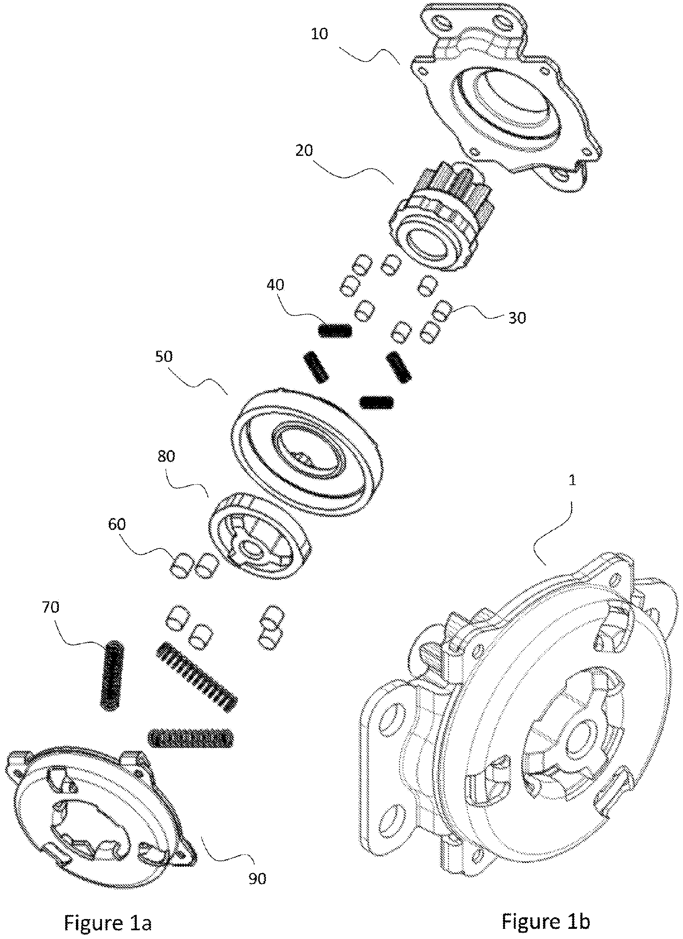

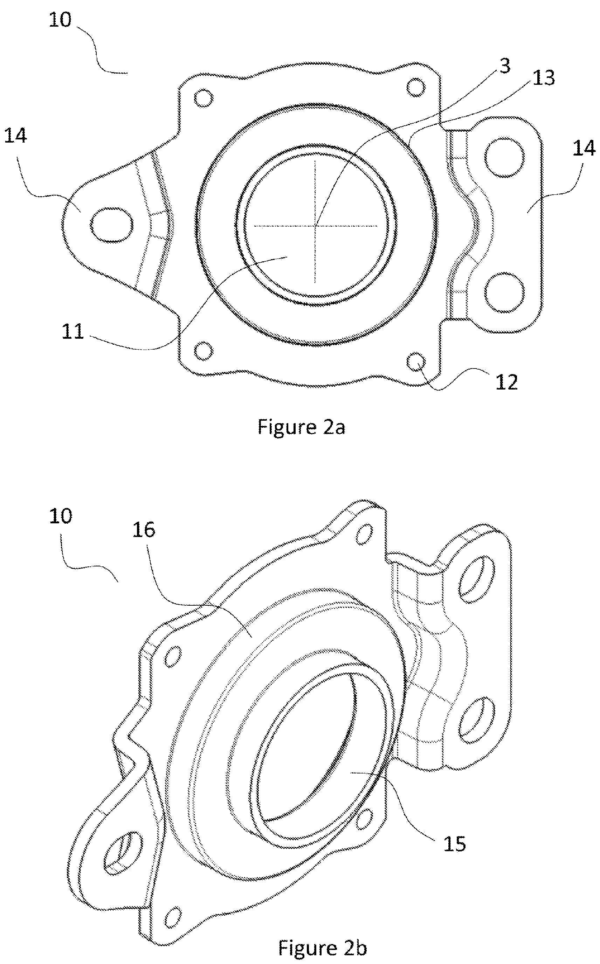

Exploded perspective view of the present invention is given in figure 1a. Perspective view of present height adjustment mechanism (1) is given in figure 1b. Top view and a perspective view of mentioned base plate (10) structure are given respectively in figure 2a and 2b. Said base plate (10) structure which is the structure bearing all forces incoming via mentioned output member (20), comprises a base plate-hole (11), screw-fastening orifices (12), a base plate-security surface (13), connection zones (14), a base plate-bearing surface (15), a base plate-locking surface (16). On the basis of that center of mentioned base plate-hole (11) is taken as center, there is an axis set (3) which is assumed to exist on this center and which consists of the intersection of the x and y axes.

Said base plate-hole (11) is the hole allowing said output member (20) to be engaged to the base plate (10).

Said screw-fastening orifices (12) which are four holes positioned on base plate (10) with 90° intervals, provides mentioned cover (90) to be centered onto the base-plate (10). Thanks to this centering, the input member (80) stopped on cover (10) remains always at desired position and provides strength, durability and resistance against shear forces incoming to cover (90) during the operation of the height adjustment mechanism (1).

Said base plate-security surface (13) which is the surface preventing brake bearings (30) to be compressed between base plate (10) and output member (20) is provided by giving radius on safety corner surfaces.

Mentioned connection zone (14) allows the height adjustment mechanism (1) to be secured on the seat. There are two connection zones (14) which are positioned below and above the x axis assumed to pass within the base plate-hole (11). These connection zones (14) has angled structure. Thanks to these angled structure, it tolerates bending and rigidities incoming from base plate (10) to height adjustment mechanism (1) by acting as an elastic element. Connections zones (14) don't transmit these rigidities to base plate-locking surface (16) thanks to this angled structure and so, it prevents function loss.

Base plate-bearing surface (15) which is the surface surrounding the base plate-hole (11) and having a certain thickness, allows the output member (20) located within the base plate-hole (11) to be beared in radial and axial direction.

Base plate-locking surface (16) is the force bearing surface which allows output member (20) to be locked within base plate-hole (11) by brake bearings (30) and to remain its own position during loading applied on seat.

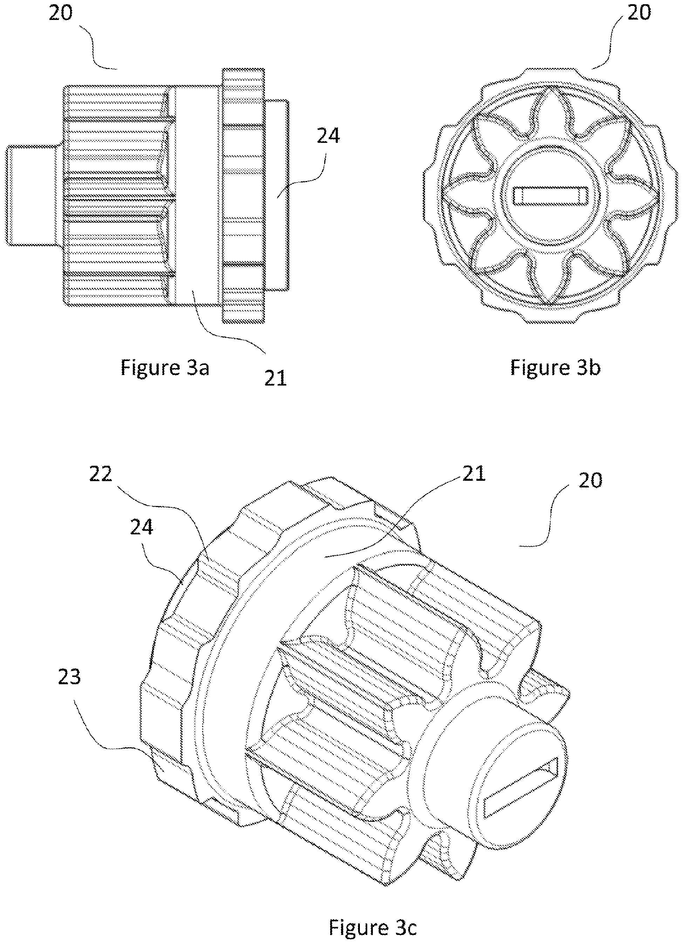

Side view, top view and a perspective view of the mentioned output member (20) are given respectively in figure 3a, 3b and 3c. Said output member (20) which is a machine element rotating as a result of motion incoming from input member (80) driven by control lever (2) and moving the seat to desired direction, comprises an output member-centering surface (21), output member-rotation surfaces (22), output member-locking surfaces (23) and an output member-bearing surface (24).

Output member-centering surface (21) is the surface which allows output member (20) to be centered within driving member (50).

Output member-rotation surface (22) is the surface in which rotation motion incoming from driving member (50) is transmitted to output member (20).

Output member-locking surface (23) is the surface which is in contact with brake bearings (30) during variable loadings incoming to seat and which bears the loadings by locking as a result of bearings.

Output member-bearing surface (24) locating on output member (20) allows driving member (50) to be beared.

Brake bearing (30) is the structure which is positioned at between base plate (10) and output member (20), locks the height adjustment mechanism (1) when it is required and consists of bearings circularly located at certain intervals.

Brake spring (40) is the structure which generates bearing-effect by pushing brake bearing (30) and allow the height adjustment mechanism (1) to be locked as a result of this effect. Brake spring (40) consists of springs circularly located at certain intervals.

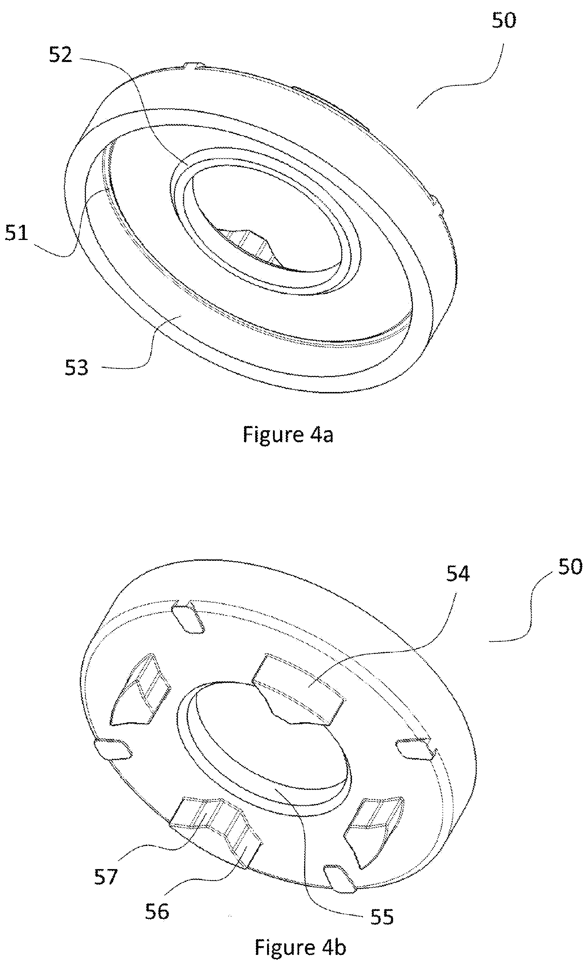

Back and front perspective views of mentioned driving member (50) are given respectively in figure 4a and 4b. Said driving member (50) which is structure transmitting the rotation motion incoming from input member (80) towards output member (20), comprises a driving member-security surface (51), a driving member-positioning surface (52), a driving member-lock surface (53), driving member-centering surfaces (54), a driving member-bearing surface (55), push surfaces (56), drive surfaces (57) and base plate contact surfaces (58).

Driving member-security surface (51) is the surface which prevents drive bearings (60) to be squeezed between input member (80) and driving member (50) and this security is provided by giving radius to corner surfaces.

Driving member-positioning surface (52) is the angled surface which allows input member (80) to be in required position during assembly and operation. At the same time, it centers the input member (80).

Driving member-lock surface (53) is the surface which is in contact with drive bearings (60), compresses drive bearings (60) with input member (80) and transmits the motion.

Driving member-centering surface (54) is the surface which positions driving member (50) onto base plate (10) and holds it in this position.

Driving member-bearing surface (55) is the surface which bears output member (20) into driving member (50).

Push surface (56) is the surface which applies pushing force to brake bearings (30) during transmission of rotation motion and abolishes locking by disrupting bearing-effect.

Drive surface (57) is the surface which transmits the rotation motion to output member (20).

Base plate contact surface (58) is the surface that settles onto base plate (10). They are positioned onto driving member (50) at 90° intervals. They decrease contact surface and consequently friction surface.

Drive bearing (60) acts as a bearing by compressed between input member (80) and driving member (50) and transmits motion.

Drive spring (70) is the element which holds drive bearings (60) in their current positions. Drive spring element (70) consists of springs circularly located at certain intervals.

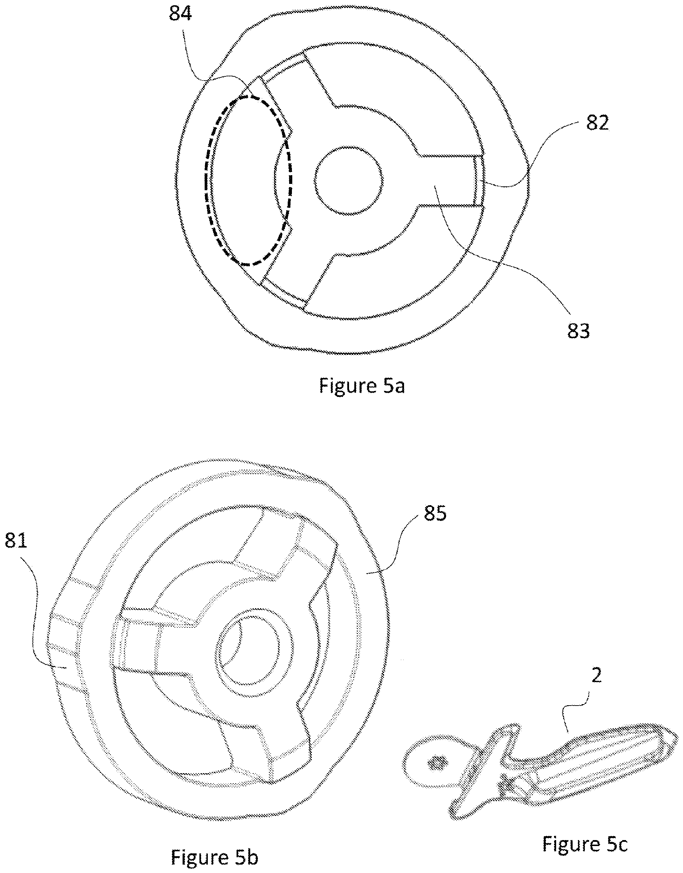

Top view and a perspective view of mentioned input member (80) are given respectively in figure 5a and 5b. Said input member (80) which is the structure transmitting the motion given via control lever (2) to driving member (50), stopping the driving member (50) and operating at a range of ±30°, comprises input member-lock surfaces (81), input member-positioning surfaces (82), an input member-contact surface (83), drive intervals (84) and cover contact surfaces (85).

Input member-lock surface (81) is the surface which compresses drive bearings (60) with driving member-lock surface (53) and transmits motion.

Input member-positioning surface (82) is the angled surface which holds input member (80) in its current position during first mounting and operation.

Input member-contact surface (83) is the surface which is in contact with driving member (50) and decreases friction.

Drive intervals (84) are the paths in which input member stopping elements (91) on cover operate. Drive intervals (84) and input member stopping elements (91) restrict input member (80) to operate in the range of ±30° by working together.

Cover contact surface (85) is the surface which decreases the contact between input member (80) and cover (90) and, consequently decreases the friction.

A perspective view of control lever is given in figure 5c.

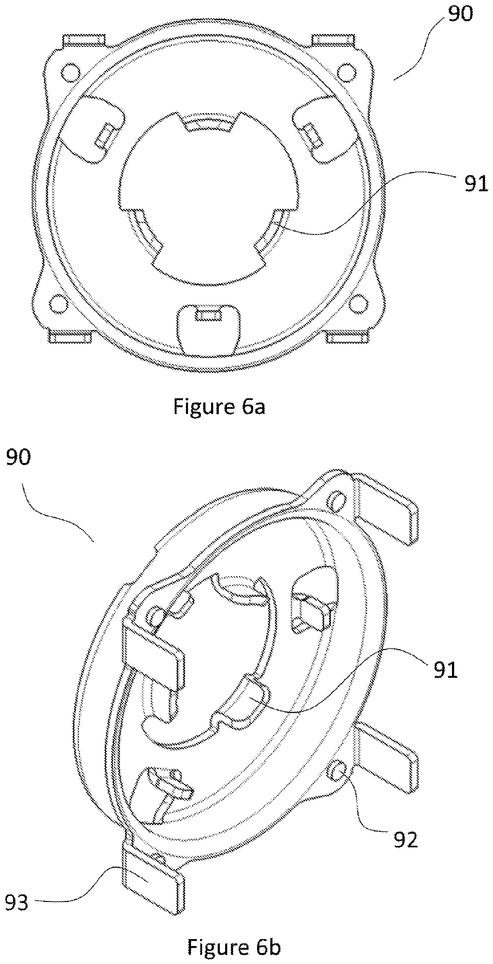

Top view and a perspective view of mentioned cover (90) are given respectively in figure 6a and 6b. Said cover (90) which has a circular geometry serving to package the height adjustment mechanism (1), input member stopping element (91), centering pins (92) and holding claws (93).

Input member stopping elements (91) are the parts which operate within drive intervals (84) and restricts input member (80) to operate in the range of ±30°.

Centering pin (92) is the structure which is positioned at 90° intervals and which allows cover (90) to remain in a constant position during packaging. Centering pins (92) allow cover (90) to be secured to base plate (10) by passing through the screw-fastening orifices (12) on base plate (10). Centering pins (92) also receives shear forces that will occur during operation.

Holding claw (93) which is the structure positioning on cover (90) at 90° intervals allows mounting of cover (90) to base plate (10) and consequently packaging.

Control lever (2) is the element which transmits first drive force to input member (80) and triggers height adjustment mechanism (1) with this force.

The difference in the design of the said height adjustment mechanism (1) provides the kinematic chain to be completely changed and therefore the working principle of the mechanism to be completely different from the conventional height adjustment mechanisms (1) and solutions. In the conventional height adjustment mechanism, all load is exerted on rollers (brake bearings (30)). As a result of the entire load is transmitted through the bearings, which are moving components, product life considerably decreases. However, in the present height adjustment mechanism (1), since the entire load is received by driving member (50) and outer surface of the output member (20), which are more durable thanks to the contact between the drive surface (57) of driving member (50) and output member (20), a durable working mechanism is achieved. It is quite easy to understand the working principle of the present height adjustment mechanism (1) when the figures 1a, 7a, 8a and 8b are examined together. According to these figures, the working principle of the present height adjustment mechanism (1):
Control lever (2) allows input member (80) to be rotated around mentioned axis set (3) thanks to said input member-positioning surface (82) and driving member-positioning surface (52) by driving the input member (80). As a result of this rotation, drive springs (70) push the drive bearings (60) so, the drive bearings (60) are locked by compressing between said driving member-lock surface (53) and input member-lock surface (81). With this locking, input member (80) and driving member (50) moving together by acting as a single piece. Thus, driving member (50) also rotates around the axis set (3) thanks to said driving member-centering surface (54) and base plate-locking surface (16). During this rotation of driving member (50), said push surface (56) applies pressure on brake springs (40) by pushing brake bearings (30). As a result of this pressure, the contact between base plate-locking surface (16) and output member-locking surface (23) is disconnected. Thus, the braking within the height adjustment mechanism (1) is disrupted. Drive surfaces (57) rotate the output member (20) around the axis set (3) thanks to said output member-bearing surface (24) and output member-centering surface (21) by contacting with said output member-rotation surface (22). Unlike the prior art, here, direct contact between output member (20) and drive surfaces (57) of driving member (50) occurs when rotation momentum incoming from control lever (2) disrupts braking by pressing onto brake bearings (30) via push surfaces (56) of driving member (50). Consequently, the momentum is transmitted directly from driving member (50) to output member (20) when braking is disrupted by mentioned push surfaces (56) of driving member (50). Thanks to mentioned direct contact, mentioned load is received by driving member (50) and output member (20) which are more durable. Thus, a more stable and durable working mechanism is obtained. Input member stopping elements (91) located on cover (90) are stopped within drive intervals (84) located on input member (80). The force incoming onto cover (90) during stopping is transmitted to base plate (10) thanks to centering pins (92), screw-fastening orifices (12) in contact with the centering pins (92) and holding claws (93). Thus, the rotation motion is completed.

When the control lever (2) driven the input member (80) is released, drive springs (70) push the drive bearings (60). As a result of this pushing, input member (80) come backs in its initial position. Driving member (50) and output member (20) stay in their last positions.

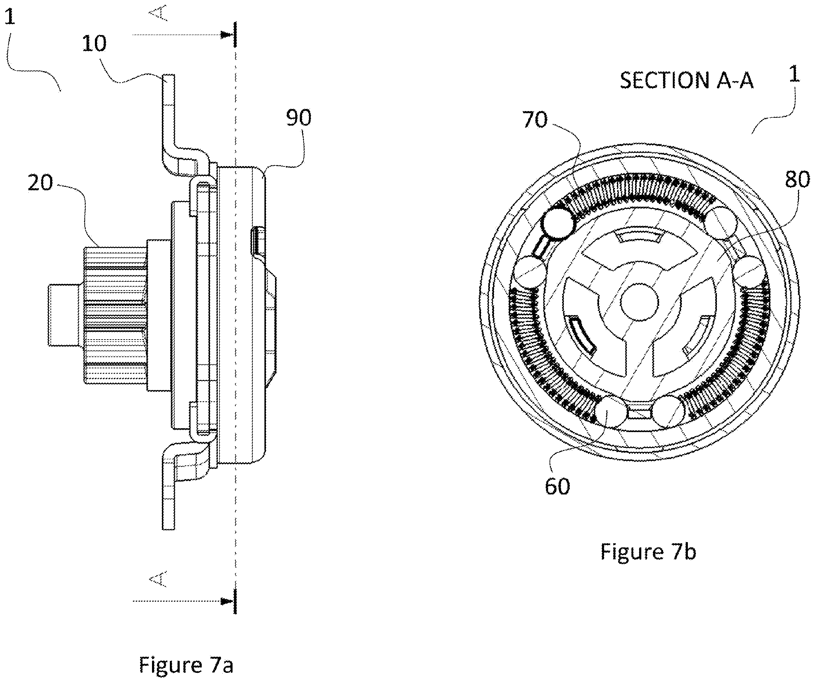

Front view and a top sectional view of present height adjustment mechanism (1) at idle state are given respectively in figure 7a and 7b. Figure 7b shows position of bearings during idle.

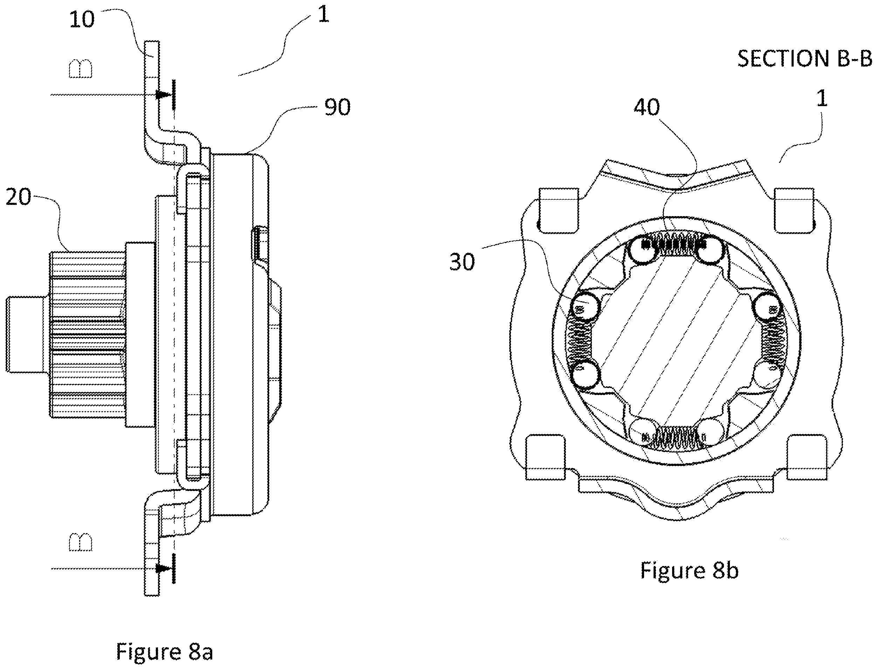

Front view and a top sectional view of present height adjustment mechanism (1) at load state are given respectively in figure 8a and 8b. Figure 8b shows position of bearings during load.

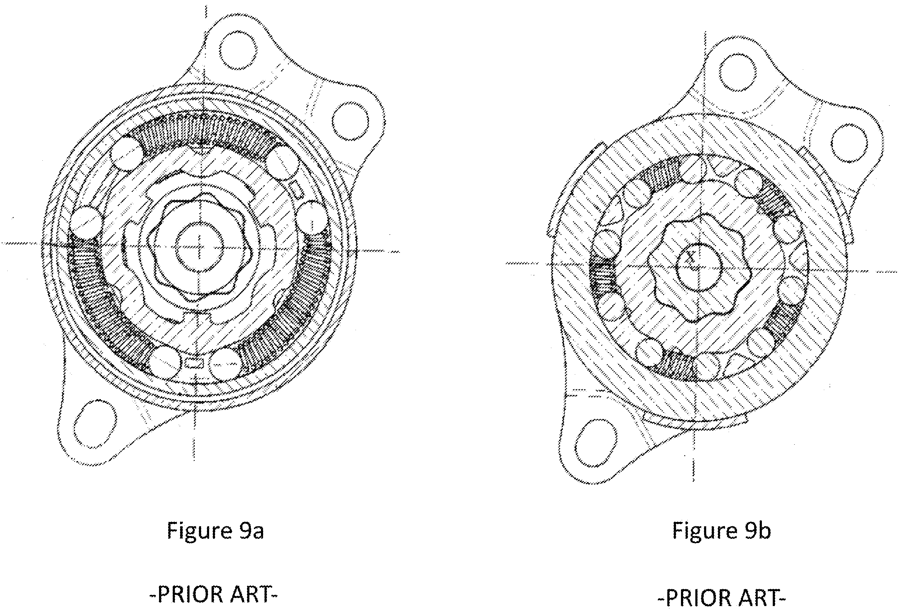

Top sectional view of prior height adjustment mechanism (1) at idle state is given in figure 9a. Top sectional view of prior height adjustment mechanism (1) at load state is given in figure 9b. Figure 9b shows position of bearings during load.

As seen from figure 8b and 9b, present invention has direct contact between output member (20) and drive surfaces (57) of driving member (50) while conventional mechanism has indirect contact between them via brake bearings (30).

## Claims

1. A height adjustment mechanism (1) which, comprising
- a control lever (2),
- an input member (80) driven with the first drive force by mentioned control lever (2),
- a driving member (50) where the motion given by said control lever (2) is transmitted by mentioned input member (80),
- drive bearings (60) which act as bearing by compressing between said input member (80) and driving member (50) and which transmit the motion,
- drive springs (70) which hold mentioned drive bearings (60) in their current positions,
- brake bearings (30),
- brake springs (40) which allow mentioned brake bearings (30) to be locked with pushing force,
- a cover (90),
- a single piece output member (20) which is rotated as a result of motion incoming from said input member (80) and so which moves the seat in desired directions,
- a single piece base plate (10) which receives the momentum incoming to mentioned output member (20) and which allows bearings and springs to work within,
- in order to allow the operating force and effort to be decreased by decreasing the friction between the brake bearings (30) and mentioned base plate (10) during rotation; at least one inclined and concave push surface (56) which is formed on the mentioned driving member and pushes the brake bearings (30) inwardly during rotation and
- in order to allow the load to be received by driving member (50) and the outer surface of the output member (20) which are more durable, instead of bearings, for increasing the product life; a kinematic chain in which there is a direct contact between output member (20) and drive surfaces (57) of driving member (50) when rotation momentum incoming from control lever (2) disrupts braking by pressing onto brake bearings (30) via said push surfaces (56) of driving member (50)
adjusts the seat heights of both driver and passengers by allowing up and down motion of these seats and **characterized in that** mentioned input member (80) which is the structure transmitting the motion given via control lever (2) to driving member (50), stopping the driving member (50), and operating at a range of ±30°, comprises
- input member-lock surfaces (81) that compresses drive bearings (60) with driving member-lock surface (53) and transmits motion,
- input member-positioning surfaces (82) that is the angled surface which holds input member (80) in its current position during first mounting and operation,
- an input member-contact surface (83) which contacts with driving member (50) and decreases friction,
- drive intervals (84) that are the paths for the input member stopping elements (91) on cover operate and restricts input member (80) to operate in the range of ±30° by working together with input member stopping elements (91) and
- cover contact surfaces (85) that decreases the contact between input member (80) and cover (90) and consequently decreases the friction.

2. A height adjustment mechanism (1) according to claim 1 and **characterized in that** the momentum is directly transmitted from driving member (50) to output member (20) when braking is disrupted by mentioned push surfaces (56) of driving member (50).

3. A height adjustment mechanism (1) according to claim 1 or 2 and **characterized in that** said brake bearings (30) are positioned between mentioned base plate (10) and said output member (20) and lock the output member (20) when it is required.

4. A height adjustment mechanism (1) according to claim 1, 2 or 3 and **characterized in that** mentioned cover (90) is engaged to said base plate (10) as holding other components between them.

## Patentansprüche

1. Höhenverstellmechanismus (1), umfassend
- einen Steuerhebel (2),
- ein Eingangselement (80), das mit der ersten Antriebskraft durch den genannten Steuerhebel (2) angetrieben wird,
- ein Antriebselement (50), in dem die durch den Steuerhebel (2) gegebene Bewegung durch das genannte Eingangselement (80) übertragen wird,
- die Antriebslager (60), die als Lager wirken, indem sie zwischen dem Eingangselement (80) und dem Antriebselement (50) zusammengedrückt werden und die Bewegung übertragen,
- die Antriebsfedern (70), die die genannten Antriebslager (60) in ihren aktuellen Positionen halten, -die Bremslager (30),
- die Bremsfedern (40), die es ermöglichen, die genannten Bremslager (30) mit Druckkraft zu blockieren,
- eine Abdeckung (90),
- ein einstückiges Ausgangselement (20), das als Ergebnis einer von dem Eingangselement (80) eingehenden Bewegung gedreht wird und so den Sitz in gewünschte Richtungen bewegt,
- eine einteilige Grundplatte (10), die das auf das genannte Ausgangselement (20) einwirkende Moment aufnimmt und in der die Lager und Federn arbeiten können,
- mindestens eine schräge und konkave Druckfläche (56), die an dem genannten Antriebselement ausgebildet ist und die Bremslager (30) während der Drehung nach innen drückt, um die Betätigungskraft und den Kraftaufwand zu verringern, indem die Reibung zwischen den Bremslagern (30) und der genannten Grundplatte (10) während der Drehung verringert wird, und
- eine kinematische Kette, in der ein direkter Kontakt zwischen dem Ausgangselement (20) und den Antriebsflächen (57) des Antriebselements (50) besteht, wenn das vom Steuerhebel (2) eingehende Drehmoment die Bremsung unterbricht, indem es über die Druckflächen (56) des Antriebselements (50) auf die Bremslager (30) drückt, um die Aufnahme der Last durch das Antriebselement (50) und die Außenfläche des Ausgangselement (20) zu ermöglichen, die anstelle von Lagern haltbarer sind, um die Lebensdauer des Produkts zu erhöhen,
wobei der Mechanismus die Sitzhöhen sowohl des Fahrers als auch der Fahrgäste einstellt, indem er eine Auf- und Abwärtsbewegung dieser Sitze ermöglicht, **dadurch gekennzeichnet, dass** das erwähnte Eingangselement (80), das die Struktur ist, die die über den Steuerhebel (2) gegebene Bewegung auf das Antriebselement (50) überträgt, das Antriebselement (50) anhält und in einem Bereich von ±30° arbeitet,
- Eingangselement-Verriegelungsflächen (81), die die Antriebslager (60) mit der Antriebselement-Verriegelungsfläche (53) zusammendrücken und die Bewegung übertragen,
- Eingangselement-Positionierungsflächen (82), die die abgewinkelte Fläche ist, die das Eingangselement (80) während der ersten Montage und des Betriebs in seiner aktuellen Position hält,
- eine Eingangselement-Kontaktfläche (83), die mit dem Antriebselement (50) in Kontakt steht und die Reibung verringert,
- Antriebsintervalle (84), die die Pfade für die Eingangselement-Anhalteelemente (91) an der Abdeckung sind, und das Eingangselement (80) durch Zusammenwirken mit den Eingangselement-Anhalteelementen (91) darauf beschränkt, in dem Bereich von ±30° zu arbeiten, und
- Abdeckungs-Kontaktflächen (85), die den Kontakt zwischen dem Eingangselement (80) und der Abdeckung (90) verringern und folglich die Reibung verringern, umfasst.

2. Höhenverstellmechanismus (1) nach Anspruch 1, **dadurch gekennzeichnet, dass** das Moment direkt vom Antriebselement (50) auf das Ausgangselement (20) übertragen wird, wenn die Bremsung durch die genannten Druckflächen (56) des Antriebselements (50) unterbrochen wird.

3. Höhenverstellmechanismus (1) nach Anspruch 1 oder 2, **dadurch gekennzeichnet, dass** die Bremslager (30) zwischen der genannten Grundplatte (10) und dem genannten Ausgangselement (20) angeordnet sind und das Ausgangselement (20) bei Bedarf blockieren.

4. Höhenverstellmechanismus (1) nach Anspruch 1, 2 oder 3, **dadurch gekennzeichnet, dass** die genannte Abdeckung (90) mit der genannten Grundplatte (10) in Eingriff steht, um andere Komponenten zwischen ihnen zu halten.

## Revendications

1. Mécanisme de réglage de hauteur (1), comprenant
- un levier de commande (2),
- un élément d'entrée (80) entraîné avec la première force d'entraînement par le levier de commande (2) mentionné,
- un élément d'entraînement (50) dans lequel le mouvement donné par ledit levier de commande (2) est transmis par l'élément d'entrée (80) mentionné,
- des paliers d'entraînement (60) qui agissent comme un palier par compression entre ledit élément d'entrée (80) et l'élément d'entraînement (50) et qui transmettent le mouvement,
- des ressorts d'entraînement (70) qui maintiennent les paliers d'entraînement (60) mentionnés dans leurs positions actuelles, -des paliers de frein (30),
- des ressorts de frein (40) qui permettent de verrouiller les paliers de frein (30) mentionnés avec une force de poussée,
- un couvercle (90),
- un élément de sortie monobloc (20) qui est mis en rotation à la suite d'un mouvement provenant dudit élément d'entrée (80) et qui déplace ainsi le siège dans des directions souhaitées,
- une plaque de base monobloc (10) qui reçoit l'impulsion entrant à l'élément de sortie (20) mentionné et qui permet aux paliers et aux ressorts de fonctionner à l'intérieur,
- afin de permettre à la force et à l'effort de fonctionnement d'être diminués en diminuant le frottement entre les paliers de frein (30) et la plaque de base (10) mentionnée pendant la rotation; au moins une surface de poussée inclinée et concave (56) qui est formée sur l'élément d'entraînement mentionné et qui pousse les paliers de frein (30) vers l'intérieur pendant la rotation, et
- afin de permettre à la charge d'être reçue par l'élément d'entraînement (50) et la surface externe de l'élément de sortie (20) qui sont plus durables, au lieu des paliers, pour augmenter la durée de vie du produit; une chaîne cinématique dans laquelle il y a un contact direct entre l'élément de sortie (20) et les surfaces d'entraînement (57) de l'élément d'entraînement (50) lorsque l'impulsion de rotation provenant du levier de commande (2) perturbe le freinage en appuyant sur les paliers de frein (30) via ledit surfaces de poussée (56) de l'élément d'entraînement (50)
lequel mécanisme ajuste la hauteur des sièges du conducteur et des passagers en permettant un mouvement de haut en bas de ces sièges et **caractérisé en ce que** l'élément d'entrée (80) mentionné qui est la structure transmettant le mouvement donné via le levier de commande (2) à l'élément d'entraînement (50), arrêtant l'élément d'entraînement (50) et fonctionnant dans une plage de ±30°, comprend
- des surfaces de verrouillage d'élément d'entrée (81) qui compriment les paliers d'entraînement (60) avec la surface de verrouillage d'élément d'entraînement (53) et transmettent le mouvement,
- des surfaces de positionnement d'élément d'entrée (82) qui sont la surface inclinée qui maintient l'élément d'entrée (80) dans sa position actuelle pendant le premier montage et le premier fonctionnement,
- une surface de contact d'élément d'entrée (83) qui entre en contact avec l'élément d'entraînement (50) et diminue le frottement,
- les intervalles d'entraînement (84) qui sont les trajets des éléments d'arrêt de l'élément d'entrée (91) sur le couvercle fonctionnent et limitent le fonctionnement de l'élément d'entrée (80) dans la plage de ±30° en coopérant avec les éléments d'arrêt de l'élément d'entrée (91), et
- les surfaces de contact du couvercle (85) qui diminuent le contact entre l'élément d'entrée (80) et le couvercle (90) et diminuent par conséquent le frottement.

2. Mécanisme de réglage de hauteur (1) selon la revendication 1 et **caractérisé en ce que** l'impulsion est directement transmise de l'élément d'entraînement (50) à l'élément de sortie (20) lorsque le freinage est interrompu par les surfaces de poussée (56) mentionnées de l'élément d'entraînement (50).

3. Mécanisme de réglage de hauteur (1) selon la revendication 1 ou 2 et **caractérisé en ce que** lesdits paliers de frein (30) sont positionnés entre la plaque de base (10) mentionnée et ledit élément de sortie (20) et verrouillent l'élément de sortie (20) lorsqu'il est nécessaire.

4. Mécanisme de réglage de hauteur (1) selon la revendication 1, 2 ou 3 et **caractérisé en ce que** le couvercle (90) mentionné est engagé sur ladite plaque de base (10) en maintenant d'autres composants entre eux.
